# EUROPÄISCHE PATENTANMELDUNG

(11) **EP 1 645 317 A1**
(43) Veröffentlichungstag der Anmeldung: **12.04.2006**
(21) Anmeldenummer: 05016034.0
(22) Anmeldetag: 23.07.2005
(51) Int. Cl.: B01D 17/02, C02F 1/40, B01D 21/00

(54) **Vorrichtung zum Abscheiden von Beimengungen von Flüssigkeiten**

(30) Priorität: 03.09.2004 DE 102004042726
(71) Anmelder: B+V Industrietechnik GmbH, 20457 Hamburg (DE)
(72) Erfinder: Drohula, Knud, 22045 Hamburg (DE); Behnke, Carsten, 22607 Hamburg (DE); Fischer, Frank, 22869 Schenefeld (DE)
(74) Vertreter: Klickow, Hans-Henning

(57) **Zusammenfassung**

Die Vorrichtung dient zum Abscheiden von Beimengungen aus Flüssigkeiten, insbesondere zur Abscheidung von Öl aus Wasser. Die Vorrichtung weist mindestens einen Trennbehälter (2) zum Abscheiden der Beimengungen aus einem Beimengungs-Flüssigkeits-Gemisch auf. Ein Innenraum des Trennbehälters ist von mindestens einer Trennwand (13) unterteilt. In einer Strömungsrichtung (12) hintereinander sind innerhalb des Trennbehälters (2) mindestens zwei miteinander verbundene Trennelemente (14,15) angeordnet. Die Trennelemente (14,15) weisen parallel zur Trennwand (13) unterschiedliche Durchmesser auf.

## Beschreibung

Die Erfindung betrifft eine Vorrichtung zum Abscheiden von Beimengungen aus Flüssigkeiten, die mindestens einen Trennbehälter zum Abscheiden der Beimengungen aus einem Beimengungs-Flüssigkeits-Gemisch aufweist und bei der ein Innenraum des Trennbehälters von mindestens einer Trennwand unterteilt ist und bei der in einer Strömungsrichtung hintereinander innerhalb des Trennbehälters mindestens zwei miteinander verbundene Trennelemente angeordnet sind.

Derartige Vorrichtungen dienen zur Abscheidung von Flüssigkeiten oder Feststoffen aus einer Trägerflüssigkeit. Insbesondere ist es möglich, eine Separation von Öl und Wasser vorzunehmen und hierdurch ölartige Verunreinigungen aus dem Wasser abzuscheiden.

Typischerweise werden sogenannte Ölseparatoren zweistufig aufgebaut und eine Abscheidung des Öls erfolgt sowohl unter Ausnutzung der Schwerkraft aufgrund von unterschiedlichen spezifischen Gewichten der voneinander zu trennenden Substanzen als auch unter Verwendung von Trennelementen, die eine Zusammenführung von kleinen und kleinsten Verunreinigungsteilchen zu größeren Teilchen unterstützen, die einfacher als sehr kleine Teile abzuscheiden sind. Insbesondere dienen die Trennelemente dazu, feinstverteilte emulgierte Öltröpfchen zu größeren Öltropfen zusammenzuführen, die im Wasser aufsteigen. Darüber hinaus wirken die Trennelemente filterartig und halten fein verteilte Feststoffe zurück, die sich nicht ohne weiteres aufgrund der Schwerkrafteinwirkung absetzen.

Gemäß dem Stand der Technik werden häufig zwei Trennelemente in Strömungsrichtung hintereinander angeordnet und in einer Strömungsrichtung von Zugankern miteinander verbunden. Bei einer Montage und Demontage der Filterelemente zur Durchführung von Reinigungsvorgängen erweist sich eine derartige Konstruktion als arbeitsaufwendig in der Handhabung.

Aufgabe der vorliegenden Erfindung ist es, eine Vorrichtung der einleitend genannten Art derart zu konstruieren, daß eine vereinfachte Handhabung unterstützt wird.

Diese Aufgabe wird erfindungsgemäß dadurch gelöst, daß die Trennelemente parallel zur Trennwand unterschiedliche Durchmesser aufweisen.

Durch die unterschiedlichen Durchmesser der Trennelemente wird in einem Übergangsbereich des einen Trennelementes in das andere Trennelement ein stufenförmiger Übergang bereitgestellt, der sowohl für eine Halterung als auch für eine Abdichtung verwendet werden kann. Die Verwendung von Zugankern wird hierdurch vermieden.

Eine strömungsgünstige Gestaltung besteht darin, daß die Trennelemente im wesentlichen zylindrische Gestaltungen aufweisen.

Eine gute zugänglichkeit des in lotrechter Richtung unteren Trennelementes wird dadurch unterstützt, daß das im Bereich einer oberen Trennkammer angeordnete zweite Trennelement einen größeren Außendurchmesser als das im Bereich einer unteren Trennkammer angeordnete erste Trennelement aufweist.

Zur Gewährleistung einer funktionsgerechten Abdichtung wird vorgeschlagen, daß in einem Übergangsbereich vom ersten Trennelement zum zweiten Trennelement eine Dichtung angeordnet ist.

Eine Handhabung unter Verwendung von Hubeinrichtungen wird dadurch erleichtert, daß mindestens eines der Trennelemente mit einem Griff versehen ist.

Eine Fixierung der Trennelemente innerhalb des Trennbehälters wird dadurch unterstützt, daß im Bereich der Trennwand eine Ausnehmung zur Aufnahme des ersten Trennelementes angeordnet ist.

Ebenfalls trägt es zu einer funktionsgerechten Halterung der Trennelemente innerhalb des Trennbehälters bei, daß mindestens eines der Trennelemente relativ zur Trennwand befestigt ist.

Ein typisches Anwendungsgebiet besteht darin, daß der Trennbehälter zur Abscheidung einer flüssigen Beimengung ausgebildet ist.

Darüber hinaus ist auch daran gedacht, daß der Trennbehälter zur Abscheidung einer festen Beimengung ausgebildet ist.

Eine bevorzugte Anwendung besteht darin, daß der Trennbehälter zur Abscheidung von Öl aus Wasser ausgebildet ist.

In den Zeichnungen sind Ausführungsbeispiele der Erfindung schematisch dargestellt. Es zeigen:
- Fig. 1: eine schematische Seitenansicht einer zweistufigen Abscheidevorrichtung und
- Fig. 2: eine schematische Darstellung von zwei Trennelementen mit unterschiedlichen Außendurchmessern, die im Bereich einer Trennwand positioniert sind.

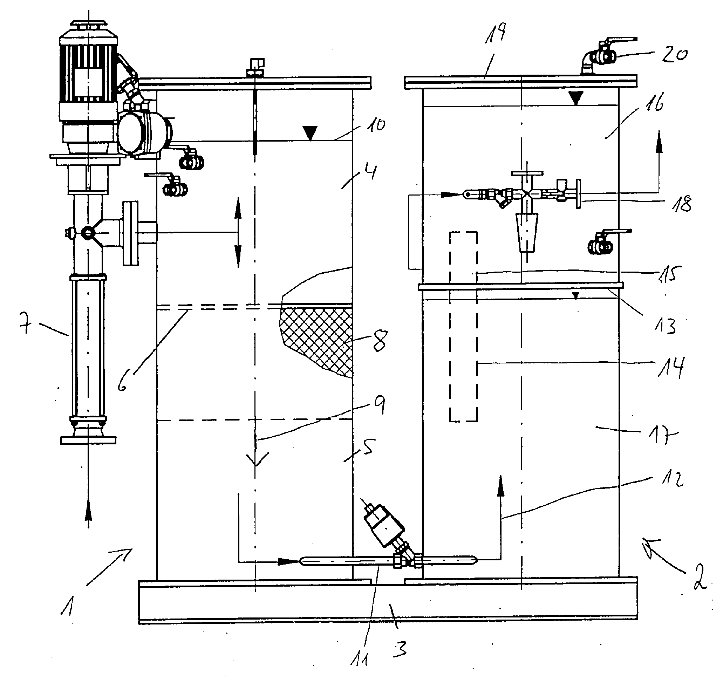

Fig. 1 zeigt eine schematische und teilweise geschnittene Seitenansicht einer Vorrichtung zur Abscheidung von Beimengungen aus Flüssigkeiten, insbesondere zur Abscheidung von Öl aus Wasser. Die Vorrichtung weist eine erste Trennstufe (1) sowie eine zweite Trennstufe (2) auf. Die Trennstufen (1, 2) sind von einem gemeinsamen Sockel (3) gehaltert. Die erste Trennstufe (1) weist eine obere Trennkammer (4) sowie eine untere Trennkammer (5) auf, die von einer siebartigen Unterteilung (6) gegeneinander abgegrenzt sind. In die obere Trennkammer (4) mündet eine Zuführung (7) ein. Unterhalb der Unterteilung (6) ist in der unteren Trennkammer (5) ein Abscheider (8) angeordnet, der typischerweise aus einem schaumartigen oder porösen Material ausgebildet wird. Eine Hauptströmungsrichtung (9) in der ersten Trennstufe (1) ist in vertikaler Richtung von oben nach unten orientiert.

In der oberen Trennkammer (4) der ersten Trennstufe (1) scheidet sich aufgrund der Schwerkrafteinwirkung im Bereich einer Flüssigkeitsoberfläche (10) das spezifisch leichtere Öl auf der restlichen Flüssigkeit ab. Aus der ersten Trennstufe (1) herausströmende Flüssigkeit wird über eine Verbindungsleitung (11) der zweiten Trennstufe (2) zugeführt. In der zweiten Trennstufe (2) ist eine Hauptströmungsrichtung (12) in lotrechter Richtung von unten nach oben orientiert. Die zweite Trennstufe (2) ist von einer Trennwand (13) unterteilt, die sich im wesentlichen in horizontaler Richtung erstreckt. Im Bereich der Trennwand (13) werden ein erstes Trennelement (14) und ein zweites Trennelement (15) gehaltert. Durch die Trennwand (13) wird die zweite Trennstufe (2) in eine obere Trennkammer (16) und eine untere Trennkammer (17) unterteilt. An die obere Trennkammer (16) ist eine Ableitung (18) für gereinigte Flüssigkeit angeschlossen. Im Bereich eines Deckels (19) der zweiten Trennstufe (2) ist ein Ablaß (20) für abgeschiedenes Öl angeordnet.

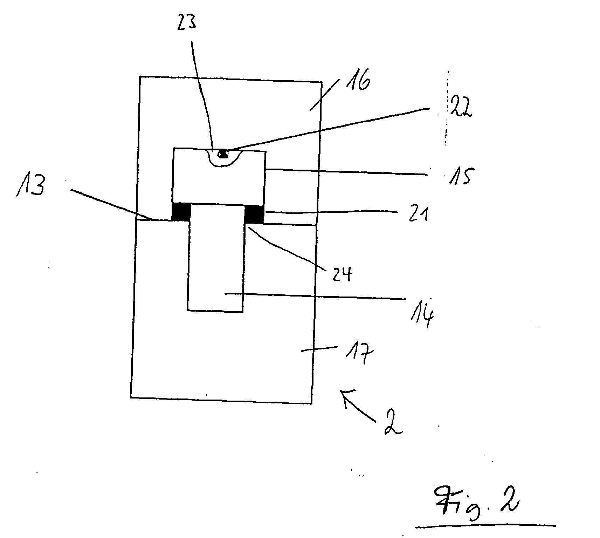

Fig. 2 zeigt eine schematische Darstellung der zweiten Trennstufe (2) mit den beiden Trennelementen (14, 15). Es ist zu erkennen, daß das obere Trennelement (15) einen größeren Außendurchmesser als das untere Trennelement (14) aufweist. Das untere Trennelement (15) ragt mit einem Ende so weit durch die Trennwand (13) hindurch, daß außenseitig eine Dichtung (21) positioniert werden kann. Auf das untere Trennelement (15) und die Dichtung (21) wird das obere Trennelement (15) aufgesetzt. Es erfolgt anschließend eine Verspannung des oberen Trennelementes (15) relativ zur Trennwand (13) und zum unteren Trennelement (14), um die erforderliche Abdichtung herbeizuführen.

Vorzugsweise weisen die Trennelemente (14, 15) eine im wesentlichen zylindrische Gestaltung auf. Zur Erleichterung einer Handhabung ist zumindest das obere Trennelement (15) mit einem Griff (22) versehen, der in einer Vertiefung (23) positioniert ist.

Zur Durchführung eines Reinigungsvorganges der Trennelemente (14, 15) wird zunächst der Deckel (19) von der zweiten Trennstufe (2) abgenommen. Anschließend erfolgt ein Lösen der das zweite Trennelement (15) mit der Trennwand verspannenden verbindungselemente sowie ein Herausziehen des zweiten Trennelementes (15) aus der oberen Trennkammer (16). Anschließend kann das erste Trennelement (14) gegebenenfalls ebenfalls unter Verwendung eines Griffes durch eine Ausnehmung (24) in der Trennwand (13) hindurch aus der unteren Trennkammer (17) sowie der oberen Trennkammer (16) herausgezogen und gereinigt werden. Ein wiedereinsetzen erfolgt in einer umgekehrten Reihenfolge.

## Patentansprüche

1. Vorrichtung zum Abscheiden von Beimengungen aus Flüssigkeiten, die mindestens einen Trennbehälter zum Abscheiden der Beimengungen aus einem Beimengungs-Flüssigkeits-Gemisch aufweist und bei der ein Innenraum des Trennbehälters von mindestens einer Trennwand unterteilt ist und bei der in einer Strömungsrichtung hintereinander innerhalb des Trennbehälters mindestens zwei miteinander verbundene Trennelemente angeordnet sind, **dadurch gekennzeichnet, daß** die Trennelemente (14, 15) parallel zur Trennwand (14) unterschiedliche Durchmesser aufweisen.

2. Vorrichtung nach Anspruch 1, **dadurch gekennzeichnet, daß** die Trennelemente (14, 15) im wesentlichen zylindrische Gestaltungen aufweisen.

3. Vorrichtung nach Anspruch 1 oder 2, **dadurch gekennzeichnet, daß** das im Bereich einer oberen Trennkammer (16) angeordnete zweite Trennelement (15) einen größeren Außendurchmesser als das im Bereich einer unteren Trennkammer (17) angeordnete erste Trennelement (14) aufweist.

4. Vorrichtung nach einem der Ansprüche 1 bis 3, **dadurch gekennzeichnet, daß** in einem Übergangsbereich vom ersten Trennelement (14) zum zweiten Trennelement (15) eine Dichtung (21) angeordnet ist.

5. Vorrichtung nach einem der Ansprüche 1 bis 4, **dadurch gekennzeichnet, daß** mindestens eines der Trennelemente (14, 15) mit einem Griff (22) versehen ist.

6. Vorrichtung nach einem der Ansprüche 1 bis 5, **dadurch gekennzeichnet, daß** im Bereich der Trennwand (14) eine Ausnehmung (24) zur Aufnahme des ersten Trennelementes (14) angeordnet ist.

7. Vorrichtung nach einem der Ansprüche 1 bis 6, **dadurch gekennzeichnet, daß** mindestens eines der Trennelemente (14, 15) relativ zur Trennwand (13) befestigt ist.

8. Vorrichtung nach einem der Ansprüche 1 bis 7, **dadurch gekennzeichnet, daß** der Trennbehälter zur Abscheidung einer flüssigen Beimengung ausgebildet ist.

9. Vorrichtung nach einem der Ansprüche 1 bis 7, **dadurch gekennzeichnet, daß** der Trennbehälter zur Abscheidung einer festen Beimengung ausgebildet ist.

10. Vorrichtung nach einem der Ansprüche 1 bis 9, **dadurch gekennzeichnet, daß** der Trennbehälter zur Abscheidung von Öl aus Wasser ausgebildet ist.
